# EUROPEAN PATENT SPECIFICATION

(11) **EP 0 846 502 B1**
(45) Date of publication and mention of the grant of the patent: **26.03.2003**
(21) Application number: 97121141.2
(22) Date of filing: 02.12.1997
(51) Int. Cl.: B09C 1/00

(54) **Device for treating the soil in the vicinity of buried structures**
Vorrichtung zur Behandlung des Bodens in der Nähe von unterirdischen Bauwerken
Dispositif pour le traitement du sol au voisinage de structures enterrées

(30) Priority: 09.12.1996 IT MN960039; 31.10.1997 IT MN970035
(43) Date of publication of application: 10.06.1998
(73) Proprietor: Pizzorni, Domenico, 16100 Genova (IT); Prandi, Alberto, 46100 Mantova (IT)
(72) Inventor: Pizzorni, Domenico, 16100 Genova (IT); Prandi, Alberto, 46100 Mantova (IT)
(74) Representative: Modiano, Guido, Dr.-Ing.

(56) References cited:
- WO-A-95/07773
- US-A- 4 725 551
- US-A- 4 982 788
- US-A- 5 116 515
- US-A- 5 293 941
- US-A- 5 421 671

## Description

The present invention relates to a device for treating the soil in the vicinity of buried structures.

The wide range of problems that occur due to the presence of structures underground, particularly tanks and pipelines, is known.

In the case of tanks for containing pollutants, there is the danger of corrosion of the walls of said tanks, with the consequent leakage of said substances in the neighboring soil; measures such as cathodic protection or the sheathing of the walls with substances such as fiberglass-reinforced plastics have accordingly been proposed.

These measures, however, entail high costs and are also often questionably effective.

The requirement of avoiding subsoil pollution also causes the need to install systems for detecting any leakage from tanks and lines; for this purpose, either installation is performed of probes constituted, in the prior art, by slotted tubes which are driven into the ground and by means of which the gas contained in the subsoil is extracted in order to analyze it, or micrometric indicators are inserted in the tanks which detect any decrease in the level of the contained liquid.

Various systems, mainly based on the injection of air, which is suitable to facilitate biodegradation of pollutants, into the subsoil by means of probes, are also currently known for reclaiming polluted soils.

It is evident that the current situation is characterized by independent and different approaches to the different problems, with high costs and anything but ideal functional effectiveness.

US 4,725,551 discloses a device for treating the ground in the vicinity of buried structures, comprising a plurality of probes which are driven into the subsoil and are connected to a control unit provided with means for generating, within the ground, a flow of air.

The aim of the present invention is to provide a device for treating the soil in the vicinity of buried structures which allows a global action that seeks to solve all the problems posed, consequently reducing costs and improving the results obtained.

Within the scope of this aim, an object of the present invention is to provide a probe which, once driven into the ground, allows variations in its operating characteristics.

This aim, this object and others which will become apparent hereinafter are achieved by a device for treating the soil in the vicinity of buried structures, according to the present invention, comprising a plurality of probes which are driven into the subsoil and are connected to a control unit provided with means for generating, within the ground, a flow of air, characterized in that said control unit further comprises a drying device for drying the air flow, and the plurality of probes are arranged proximate to the buried structures so as to make the generated air flow lap all the surfaces of said buried structures.

Advantageously, means are provided for heating the dry air and the probes are furthermore divided into an injection set and an extraction set, said extraction set being connected to the control unit with at least one line which comprises at least means for detecting characteristics of the flow.

According to the present invention, a probe also comprises an outer tubular jacket, provided with through holes at its entire wall, and a tubular core, which has a solid wall and is shorter than the outer jacket; said core is associated in contact with the inner surface of said jacket and is provided with means which allow to arrange it in any position.

Further characteristics and advantages of the present invention will become apparent from the following detailed description of a preferred but not exclusive embodiment thereof, illustrated only by way of non-limitative example in the accompanying drawings, wherein:
figure 1 is a view of an application of the device to the treatment of the soil in the vicinity of a buried tank;
figure 2 is a partially sectional view of a probe;
figures 3 and 4 are views of two different operating conditions that can be provided with probes according to the present invention.

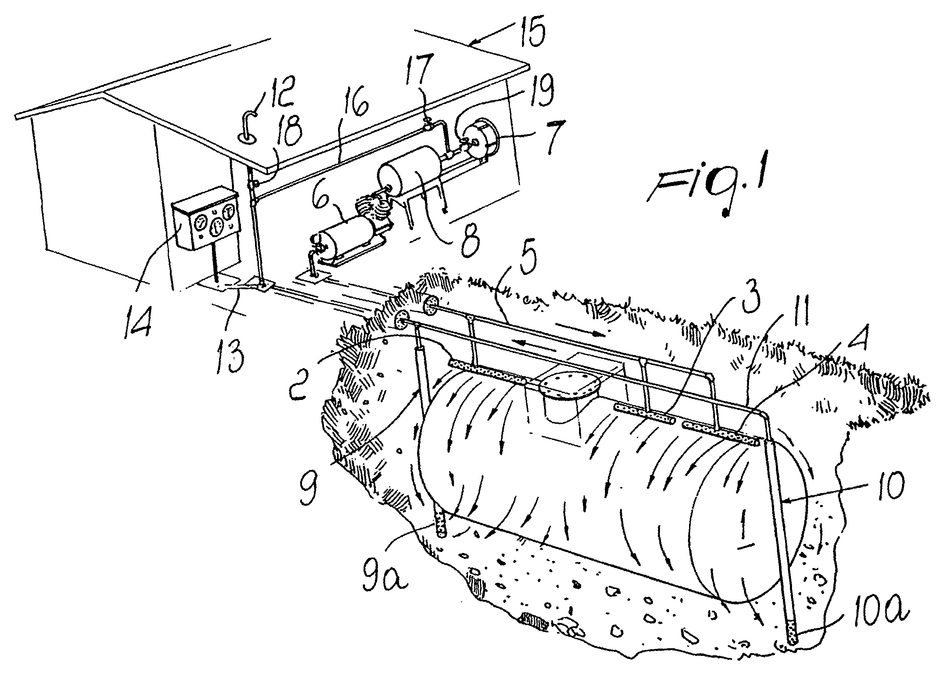

With reference to figure 1, the reference numeral 1 designates a tank which is meant to contain a pollutant, such as for example gasoline, and the reference numerals 2, 3 and 4 designate conventional probes which are driven into the subsoil above said tank in order to inject air, which is fed by means of the line 5 through the action of the compressor 6.

Said compressor is in turn supplied with atmospheric air, aspirated through the filter 7 and passed through the drying device 8, which reduces the relative humidity of said air to an optimum value.

The reference numerals 9 and 10 further designate two extraction probes, also of a known kind, which are open only at the end portions 9a, 10a located at a level lying below the tank 1, and are shielded in an upward region; said extraction probes are connected to the line 11, which leads into the atmosphere at 12 and is provided with an offtake 13, which conveys the extracted flow to devices for analyzing the composition of the flow and to devices for detecting the temperature and relative humidity of said flow, which are contained in the box 14 comprised within the building 15 that accommodates the described multipurpose control unit.

The control unit is completed by a line 16 for mutually connecting the air injection and extraction lines, and there are valves 17, 18 and 19 which allow to cut out said line or to convey along said line the flow extracted by the probes 9 and 10 in order to return it into the soil.

It is immediately evident that the present invention operates effectively from many points of view which will be set forth.

The dried air flow, indicated by the arrows in 1, strikes the walls of the tank and dehumidifies the soil in the vicinity of said tank, thus preserving it from corrosion; it also keeps the soil ventilated enough to maintain the activity of the biological processes that degrade any pollutants present due to leaks or dumping.

The aspiration of the flow on the part of the probes 9 and 10 also allows to analyze said flow so as to continuously monitor the state of the treated soil: it is noted, by way of example, that a recording performed by the instruments in the box 14 of a decrease in relative humidity, combined with an increase in the temperature of the air flow after a first period of operation, is assuredly an indicator of a correct development of said flow in the soil that lies around the tank 1 and accordingly of good efficiency in the anticorrosion treatment of said tank and in the reclamation of said soil.

This recording can therefore be followed by a certification of the adequacy of said treatments.

The monitoring of the state of the soil that can be performed with the device according to the present invention further allows, again by way of example, to record in real time the occurrence of a leak of pollutant, detected by the analyzers in the box 14, and to control the development of the subsequent reclamation treatment.

What has been described above with reference to a tank also applies, of course, to any buried structure and particularly in the case of pipelines that convey pollutants.

The above description clearly shows the high efficiency of the present invention, which combines the ability to perform a plurality of functions which are currently assigned to different devices: anticorrosion treatment of the buried structures, soil monitoring and reclamation of said soil.

The multifunctional nature of the device does not negatively affect the effectiveness of any of the operations it performs; on the contrary, a synergistic effect among said operations is observed which completes their optimization.

It should also be noted that substances, such as tracers suitable to be detected by the analyzers of the extracted flow, or nutrients suitable to facilitate biodegradation of the pollutants, can be introduced in the air injected into the subsoil.

Attention is drawn, within the framework of high functional efficiency that has been described, to the low installation cost of the invention, especially if said installation is performed during the installation of the structures to be protected, and to the low cost both in terms of labor and energy consumption.

Attention is now drawn to the probes driven into the ground, which in the known embodiment, adopted for example in the probes 9 and 10, which are constituted very simply by a slotted tube, have the disadvantageous characteristic that they allow no operating flexibility since their configuration cannot change at all.

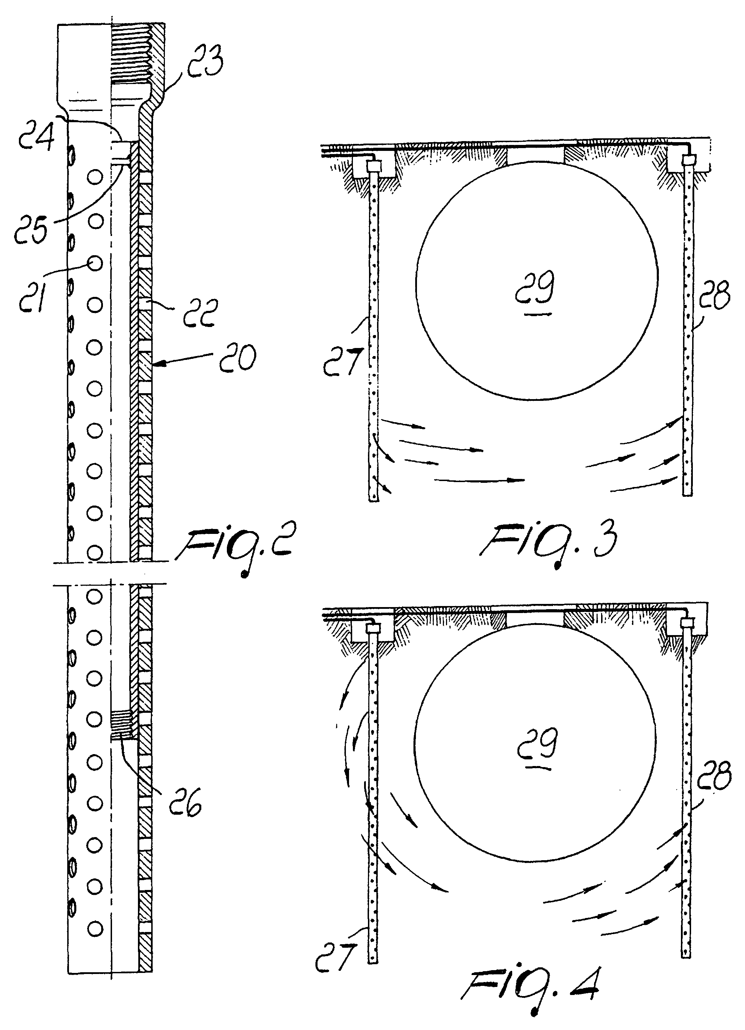

A probe according to the present invention, which once driven into the ground allows variations to its operating characteristics, is illustrated in figure 2.

With reference to the above figure, the reference numeral 20 designates the outer tubular jacket, which is provided, at its entire wall, with through holes such as 21, 22 and is shaped, at the end meant to be arranged inside a manhole, as a spigot joint 23, which allows connection to a fluid conveyance line.

The part now described relates substantially to a conventional probe.

An important characteristic of the present invention is the presence of the tubular core 24, which has a not holed, solid wall and is shorter than the jacket 20.

The core 24 is sliding fit with the inner surface of the jacket 20, with a fit which allows tight-fit sliding as a consequence of an action applied by an operator to engagement means, such as an upward traction or a downward thrust applied by means of a rod which is in contact with the bar 25 fixed to the upper end of the core; through the friction that occurs between the mutually contacting surfaces of the jacket and the core, said core remains locked in any position in which it is placed.

Said core has, at its lower end, a threaded portion 26 for fixing a closure plug, which can be useful if it is necessary for example to isolate the upper part of the probe from the lower part, which is placed in a waterlogged region.

Figures 3 and 4 illustrate the operating flexibility of the present invention in the case of probes 27 and 28 arranged proximate to a buried tank 29 in order to inject air into the ground in the vicinity of the tank, with the dual purpose of keeping said ground ventilated and dehumidified, so as to preserve the metal plates from corrosion, and of continuously monitoring the condition of the soil.

The adoption of probes according to the invention allows to change, very quickly and conveniently, the flow of air in the ground between the injection probe 27 and the extraction probe 28 from the situation shown in figure 3 to the one shown in figure 4.

In the case of figure 3, the flow is determined by placing, in both probes, the corresponding cores in the uppermost position, so that the holes in the jacket that are located in the lower region remain open; in order to change to the circulation shown in figure 4 it is sufficient to push down the core of the probe 27, thus freeing the holes of the upper region of the jacket, while the position of the core of the probe 28 remains unchanged.

The combinations that can be provided by placing the core of the probes in different positions, including intermediate ones, are obviously numberless, thus allowing specific choices as a function of the morphology of the ground affected by the treatment; this fact can be important also in view of optimizing the conditions for injecting into the soil substances, such as water or nutrient liquids, added to the air.

The described invention is susceptible of numerous modifications and variations, all of which are within the scope of the inventive concept.

Thus, for example, it is possible to heat the input air in order to increase the effectiveness of the treatment and reduce, in the case of fuel tanks, the thermal storage loss; in particular, said heating action can be controlled by means of a thermostat, so as to assuredly obtain air at a higher temperature than the ground.

This additional condition causes the above-described flow generation method to be particularly effective.

The tubular core of the probe according to the present invention can also be provided with means of any kind to allow it to move inside the jacket and to place it in the intended position.

In the practical embodiment of the invention, all the details may be replaced with other technically equivalent elements; the materials employed, as well as the shapes and the dimensions, may also be any according to requirements.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A device for treating the ground in the vicinity of buried structures, comprising a plurality of probes (2,3,4,9,10,27,28) which are driven into the subsoil and are connected to a control unit provided with means (6,7,14) for generating, within the ground, a flow of air, **characterized in that**:
said control unit further comprises a drying device (8) for drying the air flow; and
the plurality of probes (2,3,4,9,10,27,28) are arranged proximate to the buried structures (1) so as to make the generated air flow lap all the surfaces of said buried structures (1).

2. The device of claim 1 **characterized in that** the plurality of probes (2,3,4,9,10,27,28) is divided into two sets: a set of injection probes (2,3,4,27) for injecting the flow of air from above the buried structures (1) and a set (9,10,28) of extraction probes for extracting the air flow from below the buried structures (1).

3. The device of claim 1, **characterized in that** it comprises means for heating the dry air.

4. The device according to one or more of the preceding claims, **characterized in that** the set of extraction probes (9,10,28) is connected to the control unit with at least one line (11) which comprises at least means (14) for detecting characteristics of the extracted flow.

5. The device according to one or more of the preceding claims, **characterized in that** the at least one line (11) for connecting the control unit to the extraction probes (9,10,28) comprises means for analyzing the composition of the flow.

6. The device according to one or more of the preceding claims, **characterized in that** the at least one line (11) for connecting the control unit to the extraction probes (9,10,28) comprises means for detecting the temperature of the flow.

7. The device according to one or more of the preceding claims, **characterized in that** the at least one line (11) for connecting the control unit to the extraction probes (9,10,28) comprises means for detecting the humidity of the flow.

8. The device according to one or more of the preceding claims, **characterized in that** the set of probes (2,3,4,27) for injecting the flow is connected to the control unit through at least one line (5) which comprises means (6) for introducing different substances, such as tracers or nutrient liquids.

9. The device according to one or more of the preceding claims, particularly for treating the ground proximate to a buried tank (1), **characterized in that** injection probes (2,3,4) are driven into the ground in a position that lies above the tank and extraction probes (9,10) suitable to remove the flow created by the injection probes (2,3,4) are driven in a position located below said tank (1).

10. The device according to one or more of the preceding claims, **characterized in that** a probe (27,28) comprises an outer tubular jacket (20), provided with through holes (22) at its entire wall, and a tubular core (24), which has a solid wall and is shorter than the outer jacket (20), said core (24) being sliding fit with the inner surface of said jacket (20) and having engagement means (25) that allow placement thereof in any desired position.

11. The device according to one or more of the preceding claims, **characterized in that** the tubular core (24) of the probe (27,28) is associated with the internal surface of the perforated jacket (20) with a fit which allows tight-fit sliding following an action applied thereon at the engagement means (25).

12. The device according to one or more of the preceding claims, **characterized in that** it comprises a plug for closing the lower end (26) of the tubular core (24) of the probe (27,28).

## Patentansprüche

1. Vorrichtung zur Behandlung des Bodens in der Nähe von unterirdischen Bauwerken, die mehrere Meßfühler (2, 3, 4, 9, 10, 27, 28) enthält, die in den Untergrund getrieben werden und mit einer Steuereinheit verbunden sind, die mit einer Einrichtung (6, 7, 14) zur Erzeugung eines Luftstroms im Boden ausgestattet ist, **dadurch gekennzeichnet, dass**:
die Steuereinheit ferner eine Trocknungsvorrichtung (8) zum Trocknen des Luftstroms umfasst und
dass die mehreren Meßfühler (2, 3, 4, 9, 10, 27, 28) in der Nähe der unterirdischen Bauwerke (1) angeordnet sind, so dass der erzeugte Luftstrom die gesamte Oberflächen der unterirdischen Bauwerke (1) erfaßt.

2. Vorrichtung nach Anspruch 1, **dadurch gekennzeichnet, dass** die mehreren Meßfühler (2, 3, 4, 9, 10, 27, 28) in zwei Sätze unterteilt sind: ein Satz Injektions-Meßfühler (2, 3, 4, 27) zur Injektion des Luftstroms von oberhalb der unterirdischen Bauwerke (1) und ein Satz Extrakions-Meßfühler (9, 10, 28) zur Extraktion des Luftstroms von unterhalb der unterirdischen Bauwerke (1).

3. Vorrichtung nach Anspruch 1, **dadurch gekennzeichnet, dass** sie eine Einrichtung zur Erwärmung der trockenen Luft enthält.

4. Vorrichtung nach einem oder mehreren der vorhergehenden Ansprüche, **dadurch gekennzeichnet, dass** der Satz Extrakions-Meßfühler (9, 10, 28) mit der Steuereinheit mit mindestens einer Leitung (11) verbunden ist, die mindestens eine Einrichtung (14) zur Erfassung der Kennwerte des extrahierten Stroms umfasst.

5. Vorrichtung nach einem oder mehreren der vorhergehenden Ansprüche, **dadurch gekennzeichnet, dass** die mindestens eine Leitung (11) zur Verbindung der Steuereinheit mit den Extrakions-Meßfühlern (9, 10, 28) eine Einrichtung zur Analysierung der Zusammensetzung des Stroms enthält.

6. Vorrichtung nach einem oder mehreren der vorhergehenden Ansprüche, **dadurch gekennzeichnet, dass** die mindestens eine Leitung (11) zur Verbindung der Steuereinheit mit den Extrakions-Meßfühlern (9, 10, 28) eine Einrichtung zur Erfassung der Temperatur des Stroms enthält.

7. Vorrichtung nach einem oder mehreren der vorhergehenden Ansprüche, **dadurch gekennzeichnet, dass** die mindestens eine Leitung (11) zur Verbindung der Steuereinheit mit den Extrakions-Meßfühlern (9, 10, 28) eine Einrichtung zur Erfassung der Feuchtigkeit des Stroms enthält.

8. Vorrichtung nach einem oder mehreren der vorhergehenden Ansprüche, **dadurch gekennzeichnet, dass** der Satz Meßfühler (2, 3, 4, 27) zur Injektion des Stroms über mindestens eine Leitung (5), die eine Einrichtung (6) zur Einführung verschiedener Substanzen, wie beispielsweise Tracer oder Nährflüssigkeiten, enthält, mit der Steuereinheit verbunden ist.

9. Vorrichtung nach einem oder mehreren der vorhergehenden Ansprüche, insbesondere zur Behandlung des Bodens in der Nähe eines unterirdischen Tanks (1), **dadurch gekennzeichnet, dass** die Injektions-Meßfühler (2, 3, 4) in einer Stellung in den Boden getrieben werden, die unterhalb des Tanks liegt, und die Extrakions-Meßfühler (9, 10), die zur Entfernung des von den Injektions-Meßfühlern (2, 3, 4) erzeugten Stroms geeignet sind, in einer Stellung in den Boden getrieben werden, die unterhalb des Tanks (1) liegt.

10. Vorrichtung nach einem oder mehreren der vorhergehenden Ansprüche, **dadurch gekennzeichnet, dass** ein Meßfühler (27, 28) umfasst: einen äußeren rohrförmigen Mantel (20), dessen gesamte Wand mit Durchgangsbohrungen (22) versehen ist, und einen rohrförmigen Kern (24) enthält, der eine geschlossene Wand aufweist und kürzer als der äußere rohrförmige Mantel (20) ist, wobei der Kern (24) mit der Innenfläche des Mantels (20) in Gleitpassung ist und eine Eingriffseinrichtung (25) aufweist, die die Anordnung des Meßfühlers in jeder gewünschten Lage ermöglicht.

11. Vorrichtung nach einem oder mehreren der vorhergehenden Ansprüche, **dadurch gekennzeichnet, dass** der rohrförmige Kern (24) des Messfühlers (27, 28) mit der Innenfläche des perforierten Mantels (20) in einer Passung gekoppelt ist, die ein auf eine an der Eingriffseinrichtung (25) aufgebrachte Einwirkung folgendes enges Gleiten ermöglicht.

12. Vorrichtung nach einem oder mehreren der vorhergehenden Ansprüche, **dadurch gekennzeichnet, dass** sie einen Stopfen zum Schließen des unteren Endes (26) des rohrförmigen Kerns (24) des Messfühlers (27, 28) enthält.

## Revendications

1. Dispositif pour traiter le sol au voisinage de structures enterrées, comprenant une pluralité de sondes (2, 3, 4, 9, 10, 27, 28) qui sont tirées dans le sous-sol et sont reliées à une unité de commande équipée de moyens (6, 7, 14) pour générer, à l'intérieur du sol, un écoulement d'air, **caractérisé en ce que** :
ladite unité de commande comprend en outre un dispositif assécheur (8) pour assécher l'écoulement d'air ; et
la pluralité de sondes (2, 3, 4, 9, 10, 27, 28) est disposée à proximité des structures enterrées (1) de façon à faire recouvrir par l'écoulement d'air généré toutes les surfaces desdites structures enterrées (1).

2. Dispositif selon la revendication 1, **caractérisé en ce que** la pluralité de sondes (2, 3, 4, 9, 10, 27, 28) est divisée en deux ensembles : un ensemble de sondes d'injection (2, 3, 4, 27) pour injecter l'écoulement d'air au-dessus des structures enterrées (1), et un ensemble (9, 10, 28) de sondes d'extraction pour extraire l'écoulement d'air d'en dessous des structures enterrées (1).

3. Dispositif selon la revendication 1, **caractérisé en ce qu'**il comprend des moyens pour chauffer l'air sec.

4. Dispositif selon l'une ou plusieurs des revendications précédentes, **caractérisé en ce que** l'ensemble des sondes d'extraction (9, 10, 28) est relié à l'unité de commande par au moins une ligne (11) qui comprend au moins des moyens (14) pour détecter les caractéristiques de l'écoulement d'air extrait.

5. Dispositif selon l'une ou plusieurs des revendications précédentes, **caractérisé en ce qu'**au moins une ligne (11) de liaison de l'unité de commande aux sondes d'extraction (9, 10, 28) comprend des moyens pour analyser la composition de l'écoulement d'air.

6. Dispositif selon l'une ou plusieurs des revendications précédentes, **caractérisé en ce qu'**au moins une ligne (11) de liaison de l'unité de commande aux sondes d'extraction (9, 10, 28) comprend des moyens pour détecter la température de l'écoulement d'air.

7. Dispositif selon l'une ou plusieurs des revendications précédentes, **caractérisé en ce qu'**au moins une ligne (11) de liaison de l'unité de commande aux sondes d'extraction (9, 10, 28) comprend des moyens pour détecter l'humidité de l'écoulement d'air.

8. Dispositif selon l'une ou plusieurs des revendications précédentes, **caractérisé en ce que** l'ensemble de sondes (2, 3, 4, 27) pour injecter l'écoulement d'air est relié à l'unité de commande à travers au moins une ligne (5) qui comprend des moyens (6) pour introduire diverses substances, telles que des traceurs ou des liquides nutritifs.

9. Dispositif selon l'une ou plusieurs des revendications précédentes, en particulier pour traiter le sol à proximité d'un réservoir enterré (1), **caractérisé en ce que** les sondes d'injection (2, 3, 4) sont tirées dans le sol dans une position qui se situe au-dessus du réservoir, et **en ce que** les sondes d'extraction (9, 10) adaptées pour supprimer la circulation d'air créée par les sondes d'injection (2, 3, 4) sont tirées dans une position située sous ledit réservoir (1).

10. Dispositif selon l'une ou plusieurs des revendications précédentes, **caractérisé en ce qu'**une sonde (27, 28) comprend une enveloppe tubulaire extérieure (20), à la paroi entièrement percée de trous (22), et une âme tubulaire (24), qui a une paroi rigide et est plus courte que l'enveloppe extérieure (20), ladite âme (24) étant adaptée pour glisser le long de la surface interne de ladite enveloppe (20) et disposant de moyens d'engagement (25) qui permettent un positionnement selon une position quelconque désirée.

11. Dispositif selon l'une ou plusieurs des revendications précédentes, **caractérisé en ce que** l'âme tubulaire (24) de la sonde (27, 28) est associée à la surface interne de l'enveloppe perforée (20) selon un montage qui permet un glissement parfaitement ajusté suivant une action appliquée sur les moyens d'engagement (25).

12. Dispositif selon l'une ou plusieurs des revendications précédentes, **caractérisé en ce qu'**il comprend un bouchon pour fermer l'extrémité inférieure (26) de l'âme tubulaire (24) de la sonde (27, 28).
